# EUROPEAN PATENT SPECIFICATION

(11) **EP 3 328 140 B1**
(45) Date of publication and mention of the grant of the patent: **27.05.2020**
(21) Application number: 16827158.3
(22) Date of filing: 05.07.2016
(51) Int. Cl.: H04W 72/04, H04W 28/02

(54) **METHOD AND DEVICE FOR RESOURCE ALLOCATION**
VERFAHREN UND VORRICHTUNG ZUR RESSOURCENZUWEISUNG
PROCÉDÉ ET DISPOSITIF D'ATTRIBUTION DE RESSOURCES

(30) Priority: 21.07.2015 CN 201510432509
(43) Date of publication of application: 30.05.2018
(73) Proprietor: China Academy of Telecommunications Technology, Haidian District Beijing 100191 (CN)
(72) Inventor: ZHAO, Yali, Beijing 100191 (CN); ZHANG, Huiying, Beijing 100191 (CN)
(74) Representative: Studio Torta S.p.A.
(86) International application number: PCT/CN2016/088640
(87) International publication number: WO 2017/012467

(56) References cited:
- WO-A1-2015/016646
- WO-A1-2015/099321
- CN-A- 101 778 473
- CN-A- 101 873 704
- CN-A- 103 313 396
- CN-A- 105 163 346
- US-A1- 2015 071 212
- US-A1- 2015 071 212
- 3RD GENERATION PARTNERSHIP PROJECT.: 'Medium Access Control (MAC) protocol specification (Release 12' 3GPPTS 36.321 V12.6.0 30 June 2015, XP055348387
- QUALCOMM INCORPORATED.: 'ProSe QoS' SA WG2 MEETING #108 S 2-150893 17 April 2015, XP050942774

## Description

### TECHNICAL FIELD

The present disclosure relates to the field of wireless communication technology, in particular to a resource allocation method and a resource allocation device.

### BACKGROUND

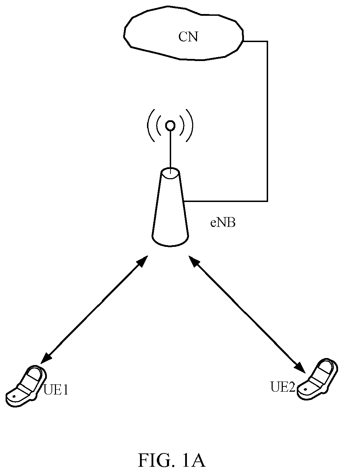

For a 3^{rd} Generation Partnership Projection (3GPP) Long Term Evolution (LTE) system, a network centralized control mode is adopted, i.e., uplink and downlink data for a User Equipment (UE) are transmitted and received under the control of a network. Communication between the UEs is forwarded and controlled by the network. There is no direct communication link between the UEs, and each UE is not allowed to transmit the uplink data voluntarily, as shown in FIG. 1A.

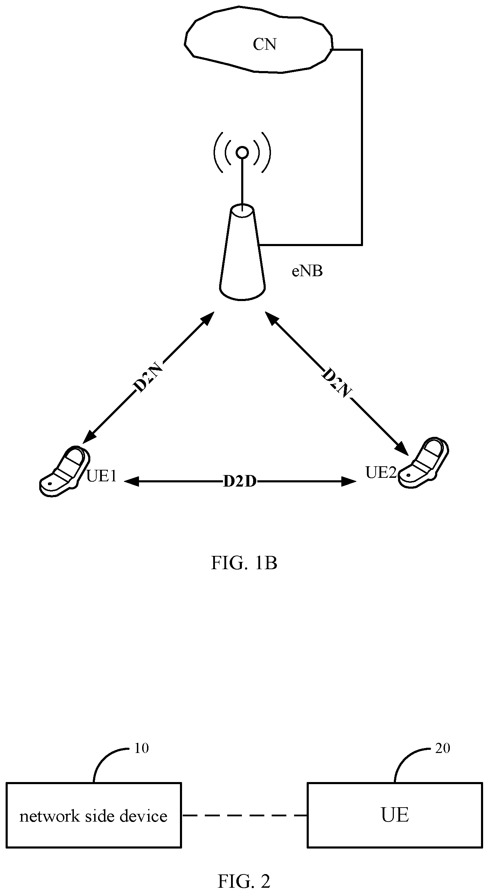

For a Device-to-Device (D2D) technique, i.e., a UE direct communication technology, the UEs in proximity to each other may transmit data within a short range through a direct communication link, without any central node (e.g., a base station) for forwarding the data, as shown in FIG. 1B.

All devices participating in the D2D communication may be in-network or off-network, or some of them may be in-network while the others are off-network. The so-called "in-network" refers to that the devices participating in the D2D communication are located within a coverage range of 3GPP D2D carriers, and the so-called "off-network" refers to that the devices participating in the D2D communication are not located within the coverage range of the 3GPP D2D carriers.

There exist the following three typical D2D communication scenarios: a scenario where one-to-one communication exists between two D2D UEs, another scenario where the same data is transmitted by one UE to all other UEs in an identical group (group communication), and yet another scenario where the same data is transmitted by one UE to the other UEs in proximity to the UE itself (broadcast communication).

The one-to-one communication between two D2D UEs is mainly used for social applications, and the group/broadcast communication is mainly used for public security applications such as fire protection, rescue and anti-terrorist.

Two allocation modes of D2D transmission resources may be supported by the D2D communication. (1) A mode where resources are scheduled by the network (Mode 1): the network may allocate the resources for the UE in accordance with D2D Buffer Status Report (BSR) information reported by the UE. (2) A mode where the resources are selected by the UE voluntarily (mode 2): the UE may select one resource from pre-configured transmission resources or transmission resources broadcast by the network for the D2D transmission.

For a conventional LTE system, in the case of establishing bearers, the network may configure Quality of Service (QoS) parameters for each bearer, and the QoS parameters are known to the base station. Hence, the base station may perform a QoS-based scheduling operation. However, for a D2D system, a Priority Per Packet (PPP) parameter corresponding to a data packet is generated by a transmission UE itself, and it is unknown to the base station. For the above-mentioned mode 1 (where the resources are scheduled by the base station for the D2D communication), in the case that the network merely knows the BSR information about the direct communication link (sidelink, e.g., a D2D link) reported by the UE but does not know a correspondence between the BSR information and the PPP parameter, it is impossible for the network to perform a PPP-based scheduling operation.

In a word, in the above-mentioned mode 1 (where the resources are scheduled by the base station for the D2D communication), it is impossible for the base station to perform the PPP-based scheduling operation.

Patent document WO2015/099321 discloses a method and a device for reporting a buffer status in the wireless communication system. However, the above-mentioned issues remain unsolved.

### SUMMARY

An object of the present disclosure is to provide resource allocation methods and resource allocation devices as defined in the appended claims, so as to solve the problem in the related art where it is impossible for the base station to perform the PPP-based scheduling operation in the mode where the resources are scheduled by the base station for the D2D communication.

In one aspect, the present disclosure provides in some embodiments a resource allocation method, including steps of: notifying, by a network side device, a first correspondence between PPPs and Logic channel Group Identifiers (LCG IDs) of each target address to a UE; upon the receipt of a sidelink BSR Medium access Control (MAC) Control Element (CE) reported by the UE, determining, by the network side device, the PPPs corresponding to the LCG IDs of each target address in the sidelink BSR MAC CE in accordance with the first correspondence; and allocating, by the network side device, a resource for each target address of the UE in accordance with the determined PPPs and buffer status information corresponding to the LCG IDs of each target address in the sidelink BSR MAC CE.

In a possible embodiment of the present disclosure, the step of notifying, by the network side device, the first correspondence between the PPPs and the LCG IDs of each target address to the UE includes configuring, by the network side device, the first correspondence in a newly-added Information Element (IE) in a System Information Block (SIB) of 3GPP Technical Specification (TS) 36.331 or in a newly-added SIB different from the SIB of 3GPP TS 36.331, and notifying the first correspondence between the PPPs and the LCG IDs of each target address to the UE through broadcasting.

In a possible embodiment of the present disclosure, the step of notifying, by the network side device, the first correspondence between the PPPs and the LCG IDs of each target address to the UE includes notifying, by the network side device, the first correspondence between the PPPs and the LCG IDs of each target address to the UE through dedicated signaling. Identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

In a possible embodiment of the present disclosure, prior to the step of notifying, by the network side device, the first correspondence between the PPPs and the LCG IDs of each target address to the UE, the resource allocation method further includes determining, by the network side device, the first correspondence between the PPPs and the LCG IDs of each target address to the UE in accordance with the number of PPPs of logic channels corresponding to each target address of the UE reported by the UE.

In another aspect, the present disclosure provides in some embodiments a resource allocation method, including steps of: receiving, by a UE, a first correspondence between PPPs and LCG IDs of each target address from a network side device; determining, by the UE, a third correspondence between logic channels and the LCG IDs of each target address in accordance with the first correspondence and a second correspondence between the PPPs and the logic channels of each target address; with respect to each target address, configuring, by the UE, data for parts of or all of the logic channels corresponding to the LCG IDs in buffer status information corresponding to the LCG IDs in a sidelink BSR MAC CE in accordance with the third correspondence; and reporting, by the UE, the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

In a possible embodiment of the present disclosure, the step of receiving, by the UE, the first correspondence between the PPPs and the LCG IDs of each target address from the network side device includes receiving, by the UE, the first correspondence through broadcasting or dedicated signaling.

In a possible embodiment of the present disclosure, the step of, with respect to each target address, configuring, by the UE, the data for parts of or all of the logic channels corresponding to the LCG IDs in the buffer status information corresponding to the LCG IDs in the sidelink BSR MAC CE in accordance with the third correspondence includes: determining, by the UE, the third correspondence for each target address; with respect to one target address, selecting, by the UE, one LCG ID from all the LCG IDs of the target address or selecting, by the UE, all the LCG IDs of the target address; and configuring, by the UE, data for parts of or all of the logic channels corresponding to the selected one or more LCG IDs in the buffer status information corresponding to the one or more LCG IDs in the sidelink BSR MACE CE in accordance with the third correspondence.

In a possible embodiment of the present disclosure, subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further includes configuring, by the UE, first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

In a possible embodiment of the present disclosure, the step of configuring, by the UE, the data for parts of or all of the logic channels corresponding to the selected one or more LCG IDs in the buffer status information corresponding to the one or more LCG IDs in the sidelink BSR MACE CE in accordance with the third correspondence includes: determining, by the UE, the third correspondence for each target address; with respect to one target address, selecting, by the UE, the LCG IDs where data is to be transmitted from all the LCG IDs of the target address; and configuring, by the UE, the data for parts of or all of the logic channels corresponding to the selected one or more LCG IDs in the buffer status information corresponding to the selected one or more LCG IDs in the sidelink BSR MACE CE in accordance with the third correspondence.

In a possible embodiment of the present disclosure, subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further includes configuring, by the UE, second indication information corresponding to each target address in the sidelink BSR MAC CE. The second indication information is used to notify the network side device of the number of LCG IDs of the target address in the sidelink BSR MAC CE.

In yet another aspect, the present disclosure provides in some embodiments a network side device for resource allocation, including: a notification module configured to notify a first correspondence between PPPs and LCG IDs of each target address to a UE; a determination module configured to, upon the receipt of a sidelink BSR MAC CE reported by the UE, determine the PPPs corresponding to the LCG IDs of each target address in the sidelink BSR MAC CE in accordance with the first correspondence; and an allocation module configured to allocate a resource for each target address of the UE in accordance with the determined PPPs and buffer status information corresponding to the LCG IDs of each target address in the sidelink BSR MAC CE.

In a possible embodiment of the present disclosure, the notification module is further configured to configure the first correspondence in a newly-added IE in an SIB of 3GPP TS 36.331 or in a newly-added SIB different from the SIB of 3GPP TS 36.331, and notify the first correspondence between the PPPs and the LCG IDs of each target address to the UE through broadcasting.

In a possible embodiment of the present disclosure, the notification module is further configured to notify the first correspondence between the PPPs and the LCG IDs of each target address to the UE through dedicated signaling. Identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

In a possible embodiment of the present disclosure, the notification module is further configured to, prior to notifying the first correspondence between the PPPs and the LCG IDs of each target address to the UE, determine the first correspondence between the PPPs and the LCG IDs of each target address to the UE in accordance with the number of PPPs of logic channels corresponding to each target address of the UE reported by the UE.

In still yet another aspect, the present disclosure provides in some embodiments a UE for resource allocation, including: a reception module configured to receive a first correspondence between PPPs and LCG IDs of each target address from a network side device; a processing module configured to determine a third correspondence between logic channels and the LCG IDs of each target address in accordance with the first correspondence and a second correspondence between the PPPs and the logic channels of each target address; a generation module configured to, with respect to each target address, configure data for parts of or all of the logic channels corresponding to the LCG IDs in buffer status information corresponding to the LCG IDs in a sidelink BSR MAC CE in accordance with the third correspondence; and a report module configured to report the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

In a possible embodiment of the present disclosure, the reception module is further configured to receive the first correspondence through broadcasting or dedicated signaling.

In a possible embodiment of the present disclosure, the generation module is further configured to: determine the third correspondence for each target address; with respect to one target address, select one LCG ID from all the LCG IDs of the target address or select all the LCG IDs of the target address; and configure data for parts of or all of the logic channels corresponding to the selected one or more LCG IDs in the buffer status information corresponding to the one or more LCG IDs in the sidelink BSR MACE CE in accordance with the third correspondence.

In a possible embodiment of the present disclosure, the generation module is further configured to configure first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

In a possible embodiment of the present disclosure, the generation module is further configured to: determine the third correspondence for each target address; with respect to one target address, select the LCG IDs where data is to be transmitted from all the LCG IDs of the target address; and configure the data for parts of or all of the logic channels corresponding to the selected one or more LCG IDs in the buffer status information corresponding to the selected one or more LCG IDs in the sidelink BSR MACE CE in accordance with the third correspondence.

In a possible embodiment of the present disclosure, the generation module is further configured to configure second indication information corresponding to each target address in the sidelink BSR MAC CE. The second indication information is used to notify the network side device of the number of LCG IDs of the target address in the sidelink BSR MAC CE.

In still yet another aspect, the present disclosure provides in some embodiments a network side device for resource allocation, including: a memory; a transceiver configured to receive and transmit data; and a processor configured to read programs stored in the memory, so as to: notify a first correspondence between PPPs and LCG IDs of each target address to a UE; upon the receipt of a sidelink BSR MAC CE reported by the UE, determine the PPPs corresponding to the LCG IDs of each target address in the sidelink BSR MAC CE in accordance with the first correspondence; and allocate, through the transceiver, a resource for each target address of the UE in accordance with the determined PPPs and buffer status information corresponding to the LCG IDs of each target address in the sidelink BSR MAC CE.

In still yet another aspect, the present disclosure provides in some embodiments a UE for resource allocation, including: a memory; a transceiver configured to receive and transmit data; and a processor configured to read programs stored in the memory, so as to: receive through the transceiver a first correspondence between PPPs and LCG IDs of each target address from a network side device; determine a third correspondence between logic channels and the LCG IDs of each target address in accordance with the first correspondence and a second correspondence between the PPPs and the logic channels of each target address; with respect to each target address, configure data for parts of or all of the logic channels corresponding to the LCG IDs in buffer status information corresponding to the LCG IDs in a sidelink BSR MAC CE in accordance with the third correspondence; and report through the transceiver the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

According to the embodiments of the present disclosure, the network side device notifies the first correspondence between the PPPs and the LCG IDs of each target address to the UE. Upon the receipt of the sidelink BSR MAC CE reported by the UE, the network side device determines the PPPs corresponding to the LCG IDs of each target address in the sidelink BSR MAC CE in accordance with the first correspondence, and then allocates the resource for each target address of the UE in accordance with the determined PPPs and the buffer status information corresponding to the LCG IDs of each target address in the sidelink BSR MAC CE. As a result, it is able to allocate the resource for each target address of the UE in accordance with the PPPs, thereby to improve the system performance.

### BRIEF DESCRIPTION OF THE DRAWINGS

FIG. 1A is a schematic view showing a conventional communication procedure in a cellular network;
FIG. 1B is a schematic view showing a conventional D2D communication procedure;
FIG. 2 is a schematic view showing a resource allocation system according to one embodiment of the present disclosure;
FIG. 3 is a schematic view showing an MAC CE format according to one embodiment of the present disclosure;
FIG. 4 is another schematic view showing the MAC CE format according to one embodiment of the present disclosure;
FIG. 5 is a schematic view showing a network side device according to one embodiment of the present disclosure;
FIG. 6 is a schematic view showing a UE according to one embodiment of the present disclosure;
FIG. 7 is another schematic view showing the network side device according to one embodiment of the present disclosure;
FIG. 8 is another schematic view showing the UE according to one embodiment of the present disclosure;
FIG. 9 is a flow chart of a resource allocation method according to one embodiment of the present disclosure; and
FIG. 10 is a flow chart of another source allocation method according to one embodiment of the present disclosure.

### DETAILED DESCRIPTION OF THE EMBODIMENTS

According to the embodiments of the present disclosure, a network side device notifies a first correspondence between PPPs and LCG IDs of each target address to a UE. Upon the receipt of a sidelink BSR MAC CE reported by the UE, the network side device determines the PPPs corresponding to the LCG IDs of each target address in the sidelink BSR MAC CE in accordance with the first correspondence, and then allocates the resource for each target address of the UE in accordance with the determined PPPs and buffer status information corresponding to the LCG IDs of each target address in the sidelink BSR MAC CE. As a result, it is able to allocate the resource for each target address of the UE in accordance with the PPPs, thereby to improve the system performance.

The present disclosure will be described hereinafter in conjunction with the drawings and the embodiments.

As shown in FIG. 2, the present disclosure provides in some embodiments a resource allocation system, which includes: a network side device 10 configured to notify a first correspondence between PPPs and LCG IDs of each target address to a UE, upon the receipt of a sidelink BSR MAC CE reported by the UE, determine the PPPs corresponding to the LCG IDs of each target address in the sidelink BSR MAC CE in accordance with the first correspondence, and allocate a resource for each target address of the UE in accordance with the determined PPPs and buffer status information corresponding to the LCG IDs of each target address in the sidelink BSR MAC CE; and a UE 20 configured to receive the first correspondence between the PPPs and the LCG IDs of each target address from the network side device 10, determine a third correspondence between logic channels and the LCG IDs of each target address in accordance with the first correspondence and a second correspondence between the PPPs and the logic channels of each target address, with respect to each target address, configure data for parts of or all of the logic channels corresponding to the LCG IDs in the buffer status information corresponding to the LCG IDs in the sidelink BSR MAC CE in accordance with the third correspondence, and report the sidelink BSR MAC CE to the network side device 10.

In the embodiments of the present disclosure, different target addresses have the first correspondences between the PPPs and the LCG IDs identical to one another or different from one another. The network side device 10 may notify the first correspondence between the PPPs and the LCG IDs of each target address to the UE 20.

In a possible embodiment of the present disclosure, the network side device 10 may notify the first correspondence to the UE 20 through broadcasting or dedicated signaling.

To be specific, in the case that the network side device 10 notifies the first correspondence to the UE 20, it may configure the first correspondence in a newly-added IE in an SIB of 3GPP TS 36.331 or in a newly-added SIB different from the SIB of 3GPP TS 36.331, and notify the first correspondence between the PPPs and the LCG IDs of each target address to the UE 20 through broadcasting. Correspondingly, the UE 20 may receive the first correspondence through broadcasting.

In the case that the network side device 10 notifies the first correspondence to the UE 20 through dedicated signaling, the dedicated signaling may be signaling capable of being transmitted to the UE 20, e.g., Radio Resource Control (RRC) signaling or MAC signaling.

In a possible embodiment of the present disclosure, in the case that the network side device 10 notifies the first correspondence to the UE 20 through dedicated signaling, an identical target address of different UEs may have the first correspondences between the PPPs and the LCG IDs completely identical, completely different from, or partially identical to, one another. Different target addresses of different UEs 20 may have the first correspondences between the PPPs and the LCG IDs completely identical, completely different from, or partially identical to, one another. Different target addresses of an identical UE 20 may have the first correspondences between the PPPs and the LCG IDs completely identical, completely different from, or partially identical to, one another.

In a possible embodiment of the present disclosure, in order to support the network side device 10 to configure the first correspondence for different target addresses of different UEs 20 or an identical UE 20, the UE 20 may report the number of PPPs of logic channels corresponding to at least one target address of the UE 20. Correspondingly, the network side device 10 may determine the first correspondence between the PPPs and the LCG IDs of each target address to the UE 20 in accordance with the number of PPPs of the logic channels corresponding to each target address of the UE 20 reported by the UE 20.

For example, in the case that the number of LCG IDs is equal to the number of PPPs, a base station may configure the first correspondence between the PPPs and the LCG IDs in a one-to-one (1:1) mapping mode. And in the case that the number of the PPPs is greater than the number of the LCG IDs, the base station may configure the first correspondence in an m:1 (m≥1) mapping mode.

The UE has known in advance the second correspondence between the PPPs and the logic channels. As a result, upon the receipt of the first correspondence between the PPPs and the LCG IDs of each target address, the UE may determine the third correspondence between the logic channels and the LCG IDs of each target address in accordance with the first correspondence and the second correspondence of each target address.

After the third correspondence of each target address has been determined, it is able to determine the sidelink BSR MAC CE corresponding to each target address.

To be specific, with respect to one target address, the UE may determine data for parts of or all of the logic channels corresponding to the LCG IDs and configure the data in buffer status information corresponding to the LCG IDs in the sidelink BSR MAC CE in accordance with the third correspondence.

During the implementation, in the case of reporting the sidelink BSR MAC CE, the UE needs to report a BSR in accordance with the LCG IDs with respect to each target address, and information about the PPP does not need to be carried in the BSR.

In a possible embodiment of the present disclosure, in order to further reduce the signaling overhead for reporting the BSR, two schemes are provided in the embodiments of the present disclosure.

Scheme 1: the UE may determine the third correspondence of each target address, and with respect to one target address, the UE may select one LCG ID from all the LCG IDs of the target address or select all the LCG IDs of the target address and then configure the data for parts of or all of the logic channels corresponding to the selected one or more LCG IDs in the buffer status information corresponding to the one or more LCG IDs in the sidelink BSR MACE CE in accordance with the third correspondence.

In other words, in the embodiments of the present disclosure, the BSRs may include a short BSR and a long BSR. For the short BSR, the UE needs to report the BSR for one LCG ID, and for the long BSR, the UE needs to report the BSRs for all the LCG IDs.

The UE may select the BSR to be reported. In a possible embodiment of the present disclosure, the network side device may notify the UE of the BSR to be reported.

In the case that the network side device fails to notify the UE of the BSR to be reported, the UE may configure first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

For example, the UE may indicate, through 1 bit, the type of the BSR corresponding to the target address (e.g., 0 represents the short BSR and 1 represents the long BSR), and configure the first indication information in the most front of, or at any other position of, a BSR MAC CE of the sidelink BSR MAC CE.

It should be appreciated that, apart from the mode where the first indication information is configured in the sidelink BSR MAC CE, the first indication information may also be notified to the network side device through any other messages, and any mode where the first indication information is capable of being notified to the network side device may be applied to the present disclosure.

In a possible embodiment of the present disclosure, with respect to Scheme 1, in the case of reporting the long BSR, the sidelink BSR MAC CE may not include information about the LCG ID of the target address.

Scheme 2: the UE may determine the third correspondence of each target address, and with respect to one target address, the UE may select the LCG IDs where data is to be transmitted from all the LCG IDs of the target address, and then configure the data for parts of or all of the logic channels corresponding to the selected one or more LCG IDs in the buffer status information corresponding to the selected one or more LCG IDs in the sidelink BSR MACE CE in accordance with the third correspondence.

In other words, in the embodiments of the present disclosure, with respect to each target address, merely the buffer status information corresponding to the LCG IDs where the data is to be transmitted needs to be reported.

The network side device fails to know the number of the LCG IDs reported by each target address. So in a possible embodiment of the present disclosure, the UE may configure second indication information corresponding to each target address in the sidelink BSR MAC CE. The second indication information is used to notify the network side device of the number of LCG IDs of the target address in the sidelink BSR MAC CE.

For example, the number of LCG IDs corresponding to each target address may be indicated through N bits (a value of N depends on the maximum number of LCG IDs, e.g., in the case that the number of LCG IDs corresponding to a target address A is 7, then N is 3, i.e., 111 may be used to represent the second indication information corresponding to the target address A). The second indication information may be configured in the most front of, or at any other position in the BSR MAC CE of the sidelink BSR MAC CE.

It should be appreciated that, apart from the mode where the second indication information is configured in the sidelink BSR MAC CE, the second indication information may also be notified to the network side device through any other messages, and any mode where the second indication information is capable of being notified to the network side device may be applied to the present disclosure.

In a possible embodiment of the present disclosure, in the case of allocating the resource for each target address of the UE in accordance with the determined PPPs and the buffer status information corresponding to the LCG IDs of each target address in the sidelink BSR MAC CE, the network side device may determine an allocation order in accordance with the PPPs corresponding to the LCG IDs of each target address in the sidelink BSR MAC CE, and allocate the resource for each target address of the UE in accordance with the buffer status information corresponding to the LCG IDs of the target address in the sidelink BSR MAC CE.

For example, in the case that the sidelink BSR MAC CE includes two LCG IDs, i.e., LCG ID1 and LCG ID2, of the target address A, and depending on the first correspondence, LCG ID1 has a priority level higher than LCG ID2, the network side device may allocate the resource for LCG ID1 and then allocate the resource for LCG ID2.

For another example, in the case that the sidelink BSR MAC CE includes two LCG IDs, i.e., LCG ID1 and LCG ID2, of the target address A and two LCG IDs, i.e., LCG ID3 and LCG ID4, of the target address B, and depending on the first correspondence, an order of priority levels of the LCG IDs is LCG ID1>LCG ID3>LCG ID4>LCG ID2, the network side device may allocate the resources for the LCG IDs in accordance with the order of priority levels.

In the case that some of the LCG IDs of the target address A or some of the LCG IDs of different target addresses have an identical priority level, the network side device may allocate randomly the resources for these LCG IDs with the identical priority level.

In the embodiments of the present disclosure, the network side device may be a base station (e.g., a macro base station or a Femto cell), a relay node (RN) device, or any other network side device.

The present disclosure will be described hereinafter in more details in conjunction with the following two embodiments.

### First Embodiment where the first correspondence between the PPPs and the LCG IDs is configured through broadcasting

Step 1: the base station configures the first correspondence between the PPPs and the LCG IDs through broadcasting.

In the case that the number of the LCG IDs is equal to the number of the PPP levels, the base station may configure the first correspondence between the PPPs and the LCG IDs in a 1:1 mapping mode.

In the case that the number of the LCG IDs is smaller than the number of the PPP levels, the base station may configure the first correspondence in an m:1 ((m≥1) mapping mode. For example, in the case that there are eight (8) PPP levels and four (4) LCG IDs, the base station may configure the first correspondence in a 2:1 mapping mode, as shown in Table 1.

**Table 1**

| PPP level | LCG ID |
|---|---|
| 1/2 | 00 |
| 3/4 | 01 |
| 5/6 | 10 |
| 7/8 | 11 |

The base station may configure the first correspondence in an SIB and transmit it through broadcasting.

In order to support the base station to transmit the first correspondence between the PPPs and the LCG IDs through broadcasting, a new IE may be added in the SIB of 3GPP TS 36.331 or a new SIB may be designed.

Step 2: the UE determines the third correspondence between the logic channels and the LCG IDs in accordance with the first correspondence between the PPPs and the LCG IDs received from the network side device and a second correspondence between the PPPs and the logic channels.

There is a binding relationship between the PPPs and the logic channels, so upon the receipt of the first correspondence between the PPPs and the LCG IDs from the base station through broadcasting, the UE may determine the third correspondence between the logic channels and the LCG IDs of each target address.

Step 3: the UE reports the sidelink BSR MAC CE.

In the case that a D2D link for the UE has met a triggering condition for reporting the BSR, the sidelink BSR MAC CE may be organized.

The PPP is introduced into Release 13 (R13), so a plurality of logic channels of one target address may correspond to different LCG IDs, and the sidelink BSR MAC CE in R13 may have a format different from the sidelink BSR MAC CE in Release 12 (R12). At this time, it is necessary to extend the sidelink BSR MAC CE in R12, and mark the extended sidelink BSR MAC CE with a new Locale Identifier (LCID).

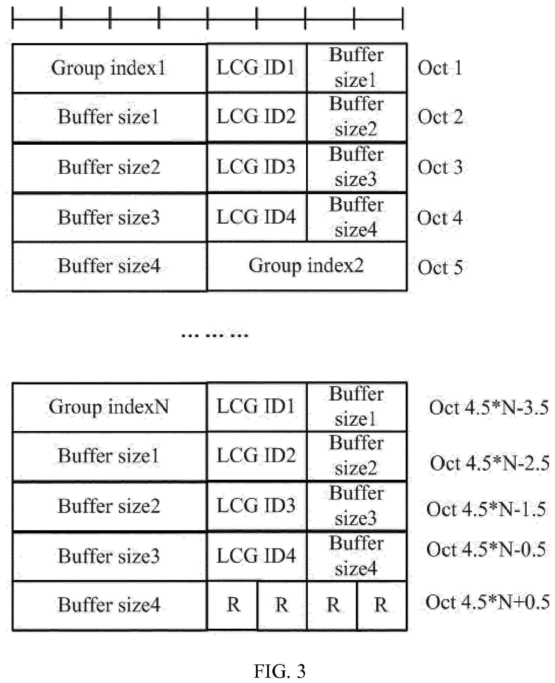

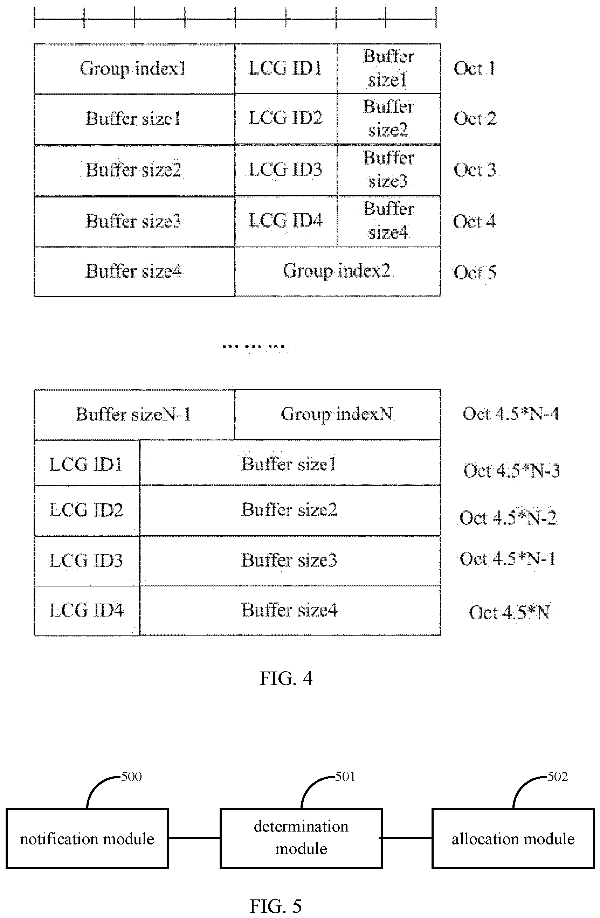

For example, each target address has four LCG IDs and the four LCG IDs must be reported simultaneously once the BSRs need to be reported. At this time, in the case that the number N of the target addresses is an even number, the format of the sidelink BSR MAC CE in R13 may refer to FIG. 3, and in the case that the number N of the target addresses is an odd number, the format of the sidelink BSR MAC CE in R13 may refer to FIG. 4.

In a possible embodiment of the present disclosure, in order to further reduce the overhead for the sidelink BSR MAC CE, any one of the following two optimization modes may be adopted.

Mode 1: the UE may make an agreement with the base station in such a manner as to merely report the short BSR (i.e., merely report the BSR for one LCG ID) or report the long BSR (i.e., report the BSRs for all the LCG IDs) with respect to each target address.

In a possible embodiment of the present disclosure, the type of the BSR corresponding to each target address may be indicated through 1 bit and configured in the most front of, or at any other position of, the sidelink BSR MAC CE.

In a possible embodiment of the present disclosure, the sidelink BSR MAC CE may not include information about the LCG ID of the target address.

Mode 2: the UE may make an agreement with the base station in such a manner as to merely report the BSR for the LCG IDs where data needs to be reported with respect to each target address.

In a possible embodiment of the present disclosure, the number of the LCG IDs of each target address may be indicated through N bits (a value of N depends on the maximum number of the LCG IDs) and configured in the most front of, or at any other position of, the sidelink BSR MAC CE.

Step 4: the base station performs a scheduling operation on the basis of D2D communication service priority levels.

The base station may perform the scheduling operation on the UE in accordance with the sidelink BSR MAC CE in R13 reported by the UE. In a possible embodiment of the present disclosure, the base station may give priority to the resource allocation for an LCG corresponding to a high PPP.

Step 5: the UE performs D2D transmission in accordance with scheduling information indicated by the base station.

Upon the receipt of scheduling signaling from the base station, the UE may organize an MAC Packet Data Unit (PDU) in accordance with the resource allocated by the base station and transmit the MAC PDU.

### Second Embodiment where the first correspondence between the PPPs and the LCG IDs is configured through dedicated signaling

Step 1: the base station configures the first correspondence between the PPPs and the LCG IDs through dedicated signaling.

In the case that the base station configures the first correspondences between the PPPs and the LCG IDs through dedicated signaling, the first correspondences may be identical to one another or different from one another with respect to different UEs or different target addresses of an identical UE.

In the case that the identical first correspondence is configured, the base station may directly determine the first correspondence between the PPPs and the LCG IDs. For example, in the case that the number of the LCG IDs is equal to the number of the PPP levels, the base station may configure the first correspondence between the PPPs and the LCG IDs in a 1:1 mapping mode.

In the case that the number of the LCG IDs is smaller than the number of the PPP levels, the base station may configure the first correspondence in an m:1 ((m≥1) mapping mode. For example, in the case that there are eight (8) PPP levels and four (4) LCG IDs, the base station may configure the first correspondence in a 2:1 mapping mode, as shown in Table 2.

**Table 2**

| PPP level | LCG ID |
|---|---|
| 1/2 | 00 |
| 3/4 | 01 |
| 5/6 | 10 |
| 7/8 | 11 |

In the case that different first correspondences are configured, the UE needs to report the number of the PPPs corresponding to all the logic channels of each target address to the base station through dedicated signaling (e.g., the number of the PPPs corresponding to each target address may be carried in SidelinkUEInformation), and then the base station may configure the first correspondence between the PPPs and the LCG IDs of the target address for the UE.

For example, for UE 1, its target address a corresponds to two logic channels (i.e., logic channel a1 and logic channel a2) which correspond to PPP levels 1 and 3, its target address b corresponds to four logic channels (i.e., logic channel b1, logic channel b2, logic channel b3 and logic channel b4) which correspond to PPP levels 1, 2, 3 and 4. For UE 2, its target address c corresponds to three logic channels (i.e., logic channel c1, logic channel c2 and logic channel c3) which correspond to PPP levels 1, 4 and 7. The first correspondences between the PPPs and the LCG IDs configured by the base station for UE 1 and UE 2 may be shown in Table 3.

**Table 3**

| | PPP level | LCG ID |
|---|---|---|
| Target address a of UE 1 | 1 | 00 |
| | 3 | 01 |
| Target address b of UE 1 | 1 | 00 |
| | 2 | 01 |
| | 3 | 10 |
| | 4 | 11 |
| Target address c of UE 2 | 1 | 00 |
| | 4 | 01 |
| | 7 | 10 |

The base station may configure the first correspondence between the PPPs and the LCG IDs through dedicated signaling, e.g., RRC reconfiguration signaling.

Step 2: the UE determines the third correspondence between the logic channels and the LCG IDs in accordance with the first correspondence between the PPPs and the LCG IDs received from the network side device and a second correspondence between the PPPs and the logic channels.

There is a binding relationship between the PPPs and the logic channels, so upon the receipt of the first correspondence between the PPPs and the LCG IDs from the base station through broadcasting, the UE may determine the third correspondence between the logic channels and the LCG IDs of each target address.

Step 3: the UE reports the sidelink BSR MAC CE.

In the case that the D2D link for the UE has met a triggering condition for reporting the BSR, the sidelink BSR MAC CE may be organized.

The PPP is introduced into R13, so a plurality of logic channels of one target address may correspond to different LCG IDs, and the sidelink BSR MAC CE in R13 may have a format different from the sidelink BSR MAC CE in R12. At this time, it is necessary to extend the sidelink BSR MAC CE in R12, and mark the extended sidelink BSR MAC CE with a new LCID.

For example, each target address has four LCG IDs and the four LCG IDs must be reported simultaneously once the BSRs need to be reported. At this time, in the case that the number N of the target addresses is an even number, the format of the sidelink BSR MAC CE in R13 may refer to FIG. 3, and in the case that the number N of the target addresses is an odd number, the format of the sidelink BSR MAC CE in R13 may refer to FIG. 4.

In a possible embodiment of the present disclosure, in order to further reduce the overhead for the sidelink BSR MAC CE, any one of the following two optimization modes may be adopted.

Mode 1: the UE may make an agreement with the base station in such a manner as to merely report the short BSR (i.e., merely report the BSR for one LCG ID) or report the long BSR (i.e., report the BSRs for all the LCG IDs) with respect to each target address.

In a possible embodiment of the present disclosure, the type of the BSR corresponding to each target address may be indicated through 1 bit and configured in the most front of, or at any other position of, the sidelink BSR MAC CE.

In a possible embodiment of the present disclosure, the sidelink BSR MAC CE may not include information about the LCG ID of the target address.

Mode 2: the UE may make an agreement with the base station in such a manner as to merely report the BSR for the LCG IDs where data needs to be reported with respect to each target address.

In a possible embodiment of the present disclosure, the number of the LCG IDs of each target address may be indicated through N bits (a value of N depends on the maximum number of the LCG IDs) and configured in the most front of, or at any other position of, the sidelink BSR MAC CE.

Step 4: the base station performs a scheduling operation on the basis of D2D communication service priority levels.

The base station may perform the scheduling operation on the UE in accordance with the sidelink BSR MAC CE in R13 reported by the UE. In a position embodiment of the present disclosure, the base station may give priority to the resource allocation for an LCG corresponding to a high PPP.

Step 5: the UE performs D2D transmission in accordance with scheduling information indicated by the base station.

Upon the receipt of scheduling signaling from the base station, the UE may organize an MAC PDU in accordance with the resource allocated by the base station and transmit the MAC PDU.

The present disclosure further provides in some embodiments a network side device which, as shown in FIG. 5, includes: a notification module 500 configured to notify a first correspondence between PPPs and LCG IDs of each target address to a UE; a determination module 501 configured to, upon the receipt of a sidelink BSR MAC CE reported by the UE, determine the PPPs corresponding to the LCG IDs of each target address in the sidelink BSR MAC CE in accordance with the first correspondence; and an allocation module 502 configured to allocate a resource for each target address of the UE in accordance with the determined PPPs and buffer status information corresponding to the LCG IDs of each target address in the sidelink BSR MAC CE.

In a possible embodiment of the present disclosure, the notification module 500 is further configured to configure the first correspondence in a newly-added IE in an SIB of 3GPP TS 36.331 or in a newly-added SIB different from the SIB of 3GPP TS 36.331, and notify the first correspondence between the PPPs and the LCG IDs of each target address to the UE through broadcasting.

In a possible embodiment of the present disclosure, the notification module 500 is further configured to notify the first correspondence between the PPPs and the LCG IDs of each target address to the UE through dedicated signaling. Identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

In a possible embodiment of the present disclosure, the notification module 500 is further configured to, prior to notifying the first correspondence between the PPPs and the LCG IDs of each target address to the UE, determine the first correspondence between the PPPs and the LCG IDs of each target address to the UE in accordance with the number of PPPs of logic channels corresponding to each target address of the UE reported by the UE.

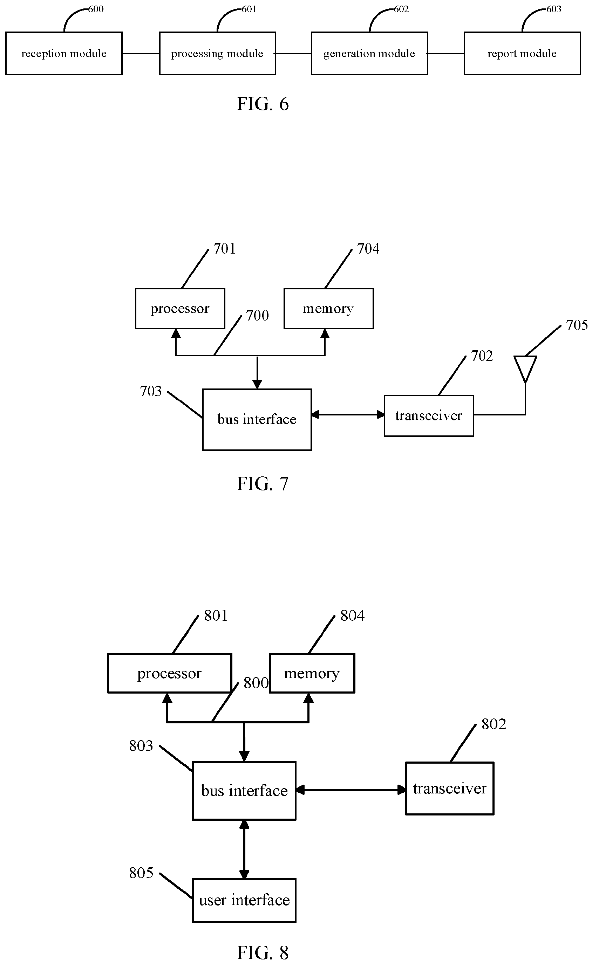

The present disclosure further provides in some embodiments a UE which, as shown in FIG. 6, includes: a reception module 600 configured to receive a first correspondence between PPPs and LCG IDs of each target address from a network side device; a processing module 601 configured to determine a third correspondence between logic channels and the LCG IDs of each target address in accordance with the first correspondence and a second correspondence between the PPPs and the logic channels of each target address; a generation module 602 configured to, with respect to each target address, configure data for parts of or all of the logic channels corresponding to the LCG IDs in buffer status information corresponding to the LCG IDs in a sidelink BSR MAC CE in accordance with the third correspondence; and a report module 603 configured to report the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

In a possible embodiment of the present disclosure, the reception module 600 is further configured to receive the first correspondence through broadcasting or dedicated signaling.

In a possible embodiment of the present disclosure, the generation module 602 is further configured to: determine the third correspondence for each target address; with respect to one target address, select one LCG ID from all the LCG IDs of the target address or select all the LCG IDs of the target address; and configure data for parts of or all of the logic channels corresponding to the selected one or more LCG IDs in the buffer status information corresponding to the one or more LCG IDs in the sidelink BSR MACE CE in accordance with the third correspondence.

In a possible embodiment of the present disclosure, the generation module 602 is further configured to configure first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

In a possible embodiment of the present disclosure, the generation module 602 is further configured to: determine the third correspondence for each target address; with respect to one target address, select the LCG IDs where data is to be transmitted from all the LCG IDs of the target address; and configure the data for parts of or all of the logic channels corresponding to the selected one or more LCG IDs in the buffer status information corresponding to the selected one or more LCG IDs in the sidelink BSR MACE CE in accordance with the third correspondence.

In a possible embodiment of the present disclosure, the generation module 602 is further configured to configure second indication information corresponding to each target address in the sidelink BSR MAC CE. The second indication information is used to notify the network side device of the number of LCG IDs of the target address in the sidelink BSR MAC CE.

The present disclosure further provides in some embodiments a network side device which, as shown in FIG. 7, includes a processor 701, a transceiver 702 and a memory 704. The processor 701 is configured to read programs stored in the memory 704, so as to: notify a first correspondence between PPPs and LCG IDs of each target address to a UE; upon the receipt of a sidelink BSR MAC CE reported by the UE, determine the PPPs corresponding to the LCG IDs of each target address in the sidelink BSR MAC CE in accordance with the first correspondence; and allocate, through the transceiver 702, a resource for each target address of the UE in accordance with the determined PPPs and buffer status information corresponding to the LCG IDs of each target address in the sidelink BSR MAC CE. The transceiver 702 is configured to receive and transmit data under the control of the processor 701.

In a possible embodiment of the present disclosure, the processor 701 is further configured to configure the first correspondence in a newly-added IE in an SIB of 3GPP TS 36.331 or in a newly-added SIB different from the SIB of 3GPP TS 36.331, and notify the first correspondence between the PPPs and the LCG IDs of each target address to the UE through broadcasting.

In a possible embodiment of the present disclosure, the processor 701 is further configured to notify the first correspondence between the PPPs and the LCG IDs of each target address to the UE through dedicated signaling. Identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

In a possible embodiment of the present disclosure, the processor 701 is further configured to, prior to notifying the first correspondence between the PPPs and the LCG IDs of each target address to the UE, determine the first correspondence between the PPPs and the LCG IDs of each target address to the UE in accordance with the number of PPPs of logic channels corresponding to each target address of the UE reported by the UE.

In FIG. 7, bus architecture 700 may include a number of buses and bridges connected to each other, so as to connect various circuits for one or more processors 701 and one or more memories 704. In addition, as is known in the art, the bus architecture 1000 may be used to connect any other circuits, such as a circuit for a peripheral device, a circuit for a voltage stabilizer and a power management circuit, which are not particularly defined herein. Bus interfaces 703 are provided between the bus architecture 700 and the transceiver 702, and the transceiver 702 may consist of one element, or more than one elements, e.g., transmitters and receivers for communication with any other devices over a transmission medium. Data from the processor 701 may be transmitted on a wireless medium through an antenna 705, and further, the antenna 701 may receive data and transmit the data to the processor 701. The processor 701 may take charge of managing the bus architecture as well as general processings, and may further provide various functions such as timing, peripheral interfacing, voltage adjustment, power source management and any other control functions. The memory 704 may store therein data desired for the operation of the processor 701.

In a possible embodiment of the present disclosure, the processor 701 may be a Central Processing Unit (CPU), an Application Specific Integrated Circuit (ASIC), a Field-Programmable Gate Array (FPGA) or a Complex Programmable Logic Device (CPLD). The present disclosure further provides in some embodiments a UE which, as shown in FIG. 8, includes a processor 801, a transceiver 802 and a memory 804. The processor 804 is configured to read programs stored in the memory 804, so as to: receive through the transceiver a first correspondence between PPPs and LCG IDs of each target address from a network side device; determine a third correspondence between logic channels and the LCG IDs of each target address in accordance with the first correspondence and a second correspondence between the PPPs and the logic channels of each target address; with respect to each target address, configure data for parts of or all of the logic channels corresponding to the LCG IDs in buffer status information corresponding to the LCG IDs in a sidelink BSR MAC CE in accordance with the third correspondence; and report through the transceiver 802 the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs. The transceiver 802 is configured to receive and transmit data under the control of the processor 801.

In a possible embodiment of the present disclosure, the processor 801 is further configured to receive the first correspondence through broadcasting or dedicated signaling.

In a possible embodiment of the present disclosure, the processor 801 is further configured to: determine the third correspondence for each target address; with respect to one target address, select one LCG ID from all the LCG IDs of the target address or select all the LCG IDs of the target address; and configure data for parts of or all of the logic channels corresponding to the selected one or more LCG IDs in the buffer status information corresponding to the one or more LCG IDs in the sidelink BSR MACE CE in accordance with the third correspondence.

In a possible embodiment of the present disclosure, the processor 801 is further configured to configure first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

In a possible embodiment of the present disclosure, the processor 801 is further configured to: determine the third correspondence for each target address; with respect to one target address, select the LCG IDs where data is to be transmitted from all the LCG IDs of the target address; and configure the data for parts of or all of the logic channels corresponding to the selected one or more LCG IDs in the buffer status information corresponding to the selected one or more LCG IDs in the sidelink BSR MACE CE in accordance with the third correspondence.

In a possible embodiment of the present disclosure, the processor 801 is further configured to configure second indication information corresponding to each target address in the sidelink BSR MAC CE. The second indication information is used to notify the network side device of the number of LCG IDs of the target address in the sidelink BSR MAC CE.

In FIG. 8, bus architecture 800 may include a number of buses and bridges connected to each other, so as to connect various circuits for one or more processors 801 and one or more memories 804. In addition, as is known in the art, the bus architecture 800 may be used to connect any other circuits, such as a circuit for a peripheral device, a circuit for a voltage stabilizer and a power management circuit, which are not particularly defined herein. Bus interfaces 803 are provided between the bus architecture 800 and the transceiver 802, and the transceiver 802 may consist of one element, or more than one elements, e.g., transmitters and receivers for communication with any other devices over a transmission medium. For example, the transceiver 802 may receive data from the other devices, and transmit the data processed by the processor 801 to the other devices. Depending on properties of a computer system, user interfaces 805 may also be provided, such as a keypad, a display, a speaker, a microphone and a joystick. The processor 801 may take charge of managing the bus architecture 800 as well general processings, e.g., running a general-purpose operating system. The memory 804 may store data therein for the operation of the processor 801.

In a possible embodiment of the present disclosure, the processor 801 may be a CPU, an ASIC, an FPGA or a CPLD.

Based on an identical inventive present disclosure further provides in some embodiments a resource allocation method. The source allocation method is performed by the network side device of the resource allocation system and a principle of the resource allocation method is similar to that of the network side device, so the implementation of the resource allocation method may refer to that of the network side device and thus will not be particularly defined herein.

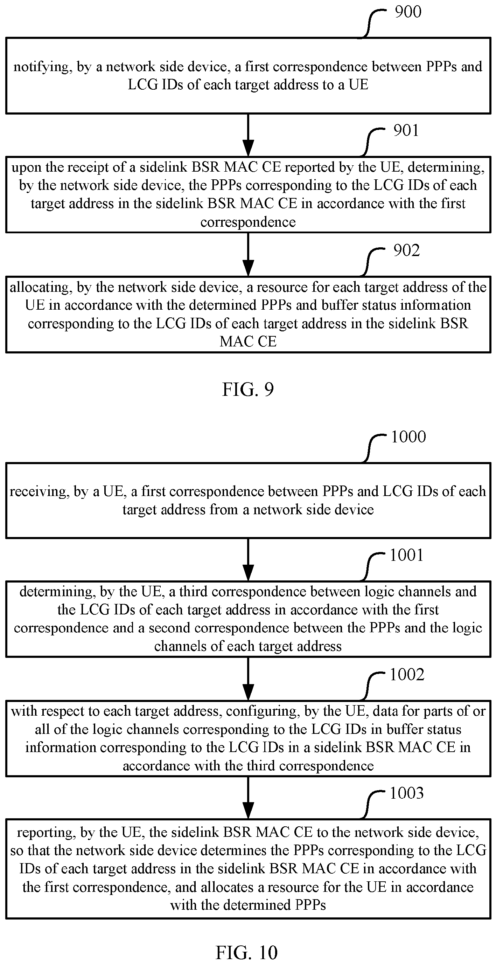

The present disclosure further provides in some embodiments a resource allocation method which, as shown in FIG. 9, includes: Step 900 of notifying, by a network side device, a first correspondence between PPPs and LCG IDs of each target address to a UE; Step 901 of, upon the receipt of a sidelink BSR MAC CE reported by the UE, determining, by the network side device, the PPPs corresponding to the LCG IDs of each target address in the sidelink BSR MAC CE in accordance with the first correspondence; and Step 902 of allocating, by the network side device, a resource for each target address of the UE in accordance with the determined PPPs and buffer status information corresponding to the LCG IDs of each target address in the sidelink BSR MAC CE.

In a possible embodiment of the present disclosure, the step of notifying, by the network side device, the first correspondence between the PPPs and the LCG IDs of each target address to the UE includes configuring, by the network side device, the first correspondence in a newly-added IE in an SIB of 3GPP TS 36.331 or in a newly-added SIB different from the SIB of 3GPP TS 36.331, and notifying the first correspondence between the PPPs and the LCG IDs of each target address to the UE through broadcasting.

In a possible embodiment of the present disclosure, the step of notifying, by the network side device, the first correspondence between the PPPs and the LCG IDs of each target address to the UE includes notifying, by the network side device, the first correspondence between the PPPs and the LCG IDs of each target address to the UE through dedicated signaling. Identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

In a possible embodiment of the present disclosure, prior to the step of notifying, by the network side device, the first correspondence between the PPPs and the LCG IDs of each target address to the UE, the resource allocation method further includes determining, by the network side device, the first correspondence between the PPPs and the LCG IDs of each target address to the UE in accordance with the number of PPPs of logic channels corresponding to each target address of the UE reported by the UE.

Based on an identical inventive present disclosure further provides in some embodiments a resource allocation method. The source allocation method is performed by the UE of the resource allocation system and a principle of the resource allocation method is similar to that of the UE, so the implementation of the resource allocation method may refer to that of the UE and thus will not be particularly defined herein.

The present disclosure further provides in some embodiments a resource allocation method which, as shown in FIG. 10, includes: Step 1000 of receiving, by a UE, a first correspondence between PPPs and LCG IDs of each target address from a network side device; Step 1001 of determining, by the UE, a third correspondence between logic channels and the LCG IDs of each target address in accordance with the first correspondence and a second correspondence between the PPPs and the logic channels of each target address; Step 1002 of, with respect to each target address, configuring, by the UE, data for parts of or all of the logic channels corresponding to the LCG IDs in buffer status information corresponding to the LCG IDs in a sidelink BSR MAC CE in accordance with the third correspondence; and Step 1003 of reporting, by the UE, the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

In a possible embodiment of the present disclosure, the step of receiving, by the UE, the first correspondence between the PPPs and the LCG IDs of each target address from the network side device includes receiving, by the UE, the first correspondence through broadcasting or dedicated signaling.

In a possible embodiment of the present disclosure, the step of, with respect to each target address, configuring, by the UE, the data for parts of or all of the logic channels corresponding to the LCG IDs in the buffer status information corresponding to the LCG IDs in the sidelink BSR MAC CE in accordance with the third correspondence includes: determining, by the UE, the third correspondence for each target address; with respect to one target address, selecting, by the UE, one LCG ID from all the LCG IDs of the target address or selecting, by the UE, all the LCG IDs of the target address; and configuring, by the UE, data for parts of or all of the logic channels corresponding to the selected one or more LCG IDs in the buffer status information corresponding to the one or more LCG IDs in the sidelink BSR MACE CE in accordance with the third correspondence.

In a possible embodiment of the present disclosure, subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further includes configuring, by the UE, first indication information in the sidelink BSR MAC CE. The first indication information is used to notify the network side device whether the buffer status information corresponding to one LCG ID of the target address or the buffer status information corresponding to all the LCG IDs of the target address is configured in the sidelink BSR MAC CE.

In a possible embodiment of the present disclosure, the step of configuring, by the UE, the data for parts of or all of the logic channels corresponding to the selected one or more LCG IDs in the buffer status information corresponding to the one or more LCG IDs in the sidelink BSR MACE CE in accordance with the third correspondence includes: determining, by the UE, the third correspondence for each target address; with respect to one target address, selecting, by the UE, the LCG IDs where data is to be transmitted from all the LCG IDs of the target address; and configuring, by the UE, the data for parts of or all of the logic channels corresponding to the selected one or more LCG IDs in the buffer status information corresponding to the selected one or more LCG IDs in the sidelink BSR MACE CE in accordance with the third correspondence.

In a possible embodiment of the present disclosure, subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further includes configuring, by the UE, second indication information corresponding to each target address in the sidelink BSR MAC CE. The second indication information is used to notify the network side device of the number of LCG IDs of the target address in the sidelink BSR MAC CE.

According to the embodiments of the present disclosure, the network side device notifies the first correspondence between the PPPs and the LCG IDs of each target address to the UE. Upon the receipt of the sidelink BSR MAC CE reported by the UE, the network side device determines the PPPs corresponding to the LCG IDs of each target address in the sidelink BSR MAC CE in accordance with the first correspondence, and then allocates the resource for each target address of the UE in accordance with the determined PPPs and the buffer status information corresponding to the LCG IDs of each target address in the sidelink BSR MAC CE. As a result, it is able to allocate the resource for each target address of the UE in accordance with the PPPs, thereby to improve the system performance.

## Claims

1. A resource allocation method, **characterized by** comprising:
notifying (S900), by a network side device, a first correspondence between Priority Per Packet, PPPs, and Logic channel Group Identifiers, LCG IDs, of each target address to a User Equipment, UE;
upon the receipt of a sidelink Buffer Status Report, BSR, Medium access Control, MAC, Control Element, CE, reported by the UE, determining (S901), by the network side device, the PPPs corresponding to the LCG IDs of each target address in the sidelink BSR MAC CE in accordance with the first correspondence; and
allocating (S902), by the network side device, a resource for each target address of the UE in accordance with the determined PPPs and buffer status information corresponding to the LCG IDs of each target address in the sidelink BSR MAC CE.

2. The resource allocation method according to claim 1, wherein the step of notifying, by the network side device, the first correspondence between the PPPs and the LCG IDs of each target address to the UE comprises configuring, by the network side device, the first correspondence in a newly-added Information Element, IE, in a System Information Block, SIB, of 3GPP Technical Specification, TS, 36.331 or in a newly-added SIB different from the SIB of 3GPP TS 36.331, and notifying the first correspondence between the PPPs and the LCG IDs of each target address to the UE through broadcasting.

3. The resource allocation method according to claim 1, wherein the step of notifying, by the network side device, the first correspondence between the PPPs and the LCG IDs of each target address to the UE comprises notifying, by the network side device, the first correspondence between the PPPs and the LCG IDs of each target address to the UE through dedicated signaling, wherein identical or different target addresses of different UEs have the first correspondences between the PPPs and the LCG IDs identical to one another or different from one another, and different target addresses of an identical UE have the first correspondences between the PPPs and the LCG IDs identical to one another or different from one another.

4. The resource allocation method according to claim 3, wherein prior to the step of notifying, by the network side device, the first correspondence between the PPPs and the LCG IDs of each target address to the UE, the resource allocation method further comprises determining, by the network side device, the first correspondence between the PPPs and the LCG IDs of each target address to the UE in accordance with the number of PPPs of logic channels corresponding to each target address of the UE reported by the UE.

5. A resource allocation method, **characterized by** comprising:
receiving (S1000), by a User Equipment, UE, a first correspondence between Priority Per Packet, PPPs, and Logic Channel Group Identifiers, LCG IDs, of each target address from a network side device;
determining (S1001), by the UE, a third correspondence between logic channels and the LCG IDs of each target address in accordance with the first correspondence and a second correspondence between the PPPs and the logic channels of each target address;
with respect to each target address, configuring (S 1002), by the UE, data for parts of or all of the logic channels corresponding to the LCG IDs in buffer status information corresponding to the LCG IDs in a sidelink Buffer Status Report, BSR, Medium Access Control, MAC, Control Element, CE, in accordance with the third correspondence; and
reporting (S1003), by the UE, the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

6. The resource allocation method according to claim 5, wherein the step of receiving, by the UE, the first correspondence between the PPPs and the LCG IDs of each target address from the network side device comprises receiving, by the UE, the first correspondence through broadcasting or dedicated signaling.

7. The resource allocation method according to claim 5, wherein the step of, with respect to each target address, configuring, by the UE, the data for parts of or all of the logic channels corresponding to the LCG IDs in the buffer status information corresponding to the LCG IDs in the sidelink BSR MAC CE in accordance with the third correspondence comprises:
determining, by the UE, the third correspondence for each target address;
with respect to one target address, selecting, by the UE, one LCG ID from all the LCG IDs of the target address or selecting, by the UE, all the LCG IDs of the target address; and
configuring, by the UE, data for parts of or all of the logic channels corresponding to the selected one or more LCG IDs in the buffer status information corresponding to the one or more LCG IDs in the sidelink BSR MAC CE in accordance with the third correspondence.

8. The resource allocation method according to claim 7, wherein subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further comprises configuring, by the UE, first indication information in the sidelink BSR MAC CE, wherein the first indication information is used to notify the network side device whether the buffer status information corresponding to one LCG ID of the target address or the buffer status information corresponding to all the LCG IDs of the target address is configured in the sidelink BSR MAC CE.

9. The resource allocation method according to claim 5, wherein the step of configuring, by the UE, the data for parts of or all of the logic channels corresponding to the selected one or more LCG IDs in the buffer status information corresponding to the one or more LCG IDs in the sidelink BSR MAC CE in accordance with the third correspondence comprises:
determining, by the UE, the third correspondence for each target address;
with respect to one target address, selecting, by the UE, the one or more LCG IDs where data is to be transmitted from all the LCG IDs of the target address; and
configuring, by the UE, the data for parts of or all of the logic channels corresponding to the selected one or more LCG IDs in the buffer status information corresponding to the selected one or more LCG IDs in the sidelink BSR MAC CE in accordance with the third correspondence.

10. The resource allocation method according to claim 9, wherein subsequent to the step of, with respect to one target address, selecting, by the UE, one LCG ID from all the LCG IDs of the target address or selecting, by the UE, all the LCG IDs of the target address, and prior to the step of reporting, by the UE, the sidelink BSR MAC CE to the network side device, the resource allocation method further comprises configuring, by the UE, second indication information corresponding to each target address in the sidelink BSR MAC CE, wherein the second indication information is used to notify the network side device of the number of LCG IDs of the target address in the sidelink BSR MAC CE.

11. A network side device for resource allocation, **characterized by** comprising:
a notification module (500) configured to notify a first correspondence between PPPs and LCG IDs of each target address to a UE;
a determination module (501) configured to, upon the receipt of a sidelink BSR MAC CE reported by the UE, determine the PPPs corresponding to the LCG IDs of each target address in the sidelink BSR MAC CE in accordance with the first correspondence; and
an allocation module (502) configured to allocate a resource for each target address of the UE in accordance with the determined PPPs and buffer status information corresponding to the LCG IDs of each target address in the sidelink BSR MAC CE.

12. The network side device according to claim 11, wherein the notification module is further configured to configure the first correspondence in a newly-added IE in an SIB of 3GPP TS 36.331 or in a newly-added SIB different from the SIB of 3GPP TS 36.331, and notify the first correspondence between the PPPs and the LCG IDs of each target address to the UE through broadcasting, or
wherein the notification module is further configured to notify the first correspondence between the PPPs and the LCG IDs of each target address to the UE through dedicated signaling, wherein identical or different target addresses of different UEs have the first correspondences between the PPPs and the LCG IDs identical to one another or different from one another, and different target addresses of an identical UE have the first correspondences between the PPPs and the LCG IDs identical to one another or different from one another, or
wherein the notification module is further configured to, prior to notifying the first correspondence between the PPPs and the LCG IDs of each target address to the UE, determine the first correspondence between the PPPs and the LCG IDs of each target address to the UE in accordance with the number of PPPs of logic channels corresponding to each target address of the UE reported by the UE.

13. A UE for resource allocation, **characterized by** comprising:
a reception module (600) configured to receive a first correspondence between PPPs and LCG IDs of each target address from a network side device;
a processing module (601) configured to determine a third correspondence between logic channels and the LCG IDs of each target address in accordance with the first correspondence and a second correspondence between the PPPs and the logic channels of each target address;
a generation module (602) configured to, with respect to each target address, configure data for parts of or all of the logic channels corresponding to the LCG IDs in buffer status information corresponding to the LCG IDs in a sidelink BSR MAC CE in accordance with the third correspondence; and
a report module (603) configured to report the sidelink BSR MAC CE to the network side device, so that the network side device determines the PPPs corresponding to the LCG IDs of each target address in the sidelink BSR MAC CE in accordance with the first correspondence, and allocates a resource for the UE in accordance with the determined PPPs.

14. The UE according to claim 13, wherein the reception module is further configured to receive the first correspondence through broadcasting or dedicated signaling, and
wherein the generation module is further configured to: determine the third correspondence for each target address; with respect to one target address, select one LCG ID from all the LCG IDs of the target address or select all the LCG IDs of the target address; and configure data for parts of or all of the logic channels corresponding to the selected one or more LCG IDs in the buffer status information corresponding to the one or more LCG IDs in the sidelink BSR MAC CE in accordance with the third correspondence, and
wherein the generation module is further configured to configure first indication information in the sidelink BSR MAC CE, wherein the first indication information is used to notify the network side device whether the buffer status information corresponding to one LCG ID of the target address or the buffer status information corresponding to all the LCG IDs of the target address is configured in the sidelink BSR MAC CE.

15. The UE according to claim 13, wherein the generation module is further configured to: determine the third correspondence for each target address; with respect to one target address, select the LCG IDs where data is to be transmitted from all the LCG IDs of the target address; and configure the data for parts of or all of the logic channels corresponding to the selected one or more LCG IDs in the buffer status information corresponding to the selected one or more LCG IDs in the sidelink BSR MAC CE in accordance with the third correspondence, and
wherein the generation module is further configured to configure second indication information corresponding to each target address in the sidelink BSR MAC CE, wherein the second indication information is used to notify the network side device of the number of LCG IDs of the target address in the sidelink BSR MAC CE.

## Patentansprüche

1. Ressourcenzuweisungsverfahren, **dadurch gekennzeichnet, dass** es umfasst:
Melden (S900), durch eine netzwerkseitige Vorrichtung, einer ersten Übereinstimmung zwischen Priorität-pro-Paket, PPPs, und Logikkanalgruppenkennungen, LCG IDs, jeder Zieladresse an eine Anwenderausrüstung, UE;
bei dem Empfang eines Seitenlink-Pufferstatusbericht-, BSR, Medienzugriffsteuerungs-, MAC, Steuerelements, CE, das von der UE berichtet ist, Bestimmen (S901), durch die netzwerkseitige Vorrichtung, der PPPs, entsprechend den LCG IDs jeder Zieladresse in dem Seitenlink BSR MAC CE gemäß der ersten Übereinstimmung; und
Zuweisen (S902), durch die netzwerkseitige Vorrichtung, einer Ressource für jede Zieladresse der UE gemäß den ermittelten PPPs und Pufferstatusinformationen entsprechend den LCG IDs jeder Zieladresse in dem Seitenlink BSR MAC CE.

2. Ressourcenzuweisungsverfahren nach Anspruch 1, wobei der Schritt des Meldens, durch die netzwerkseitige Vorrichtung, der ersten Übereinstimmung zwischen den PPPs und den LCG IDs jeder Zieladresse an die UE Konfigurieren, durch die netzwerkseitige Vorrichtung, der ersten Übereinstimmung in einem neu hinzugefügten Informationselement, IE, in einem Systeminformationsblock, SIB, von 3GPP technischer Spezifikation, TS, 36.331 oder in einem neu hinzugefügten SIB, der sich von dem SIB von 3GPP TS 36.331 unterscheidet, und Melden der ersten Übereinstimmung zwischen den PPPs und den LCG IDs jeder Zieladresse an die UE mittels Rundfunk umfasst.

3. Ressourcenzuweisungsverfahren nach Anspruch 1, wobei der Schritt des Meldens, durch die netzwerkseitige Vorrichtung, der ersten Übereinstimmung zwischen den PPPs und den LCG IDs jeder Zieladresse an die UE, Melden, durch die netzwerkseitige Vorrichtung, der ersten Übereinstimmung zwischen den PPPs und der LCG IDs jeder Zieladresse an die UE mittels dedizierter Signalisierung umfasst, wobei identische oder unterschiedliche Zieladressen unterschiedlicher UEs die ersten Übereinstimmungen zwischen den PPPs und den LCG IDs aufweisen, die identisch miteinander oder unterschiedlich voneinander sind, und unterschiedliche Zieladressen einer identischen UE die ersten Übereinstimmungen zwischen den PPPs und den LCG IDs aufweisen, die identisch miteinander oder unterschiedlich voneinander sind.

4. Ressourcenzuweisungsverfahren nach Anspruch 3, wobei vor dem Schritt des Meldens, durch die netzwerkseitige Vorrichtung, der ersten Übereinstimmung zwischen den PPPs und den LCG IDs jeder Zieladresse an die UE, das Ressourcenzuweisungsverfahren weiter Bestimmen, durch die netzwerkseitige Vorrichtung, der ersten Übereinstimmung zwischen den PPPs und den LCG IDs jeder Zieladresse an die UE gemäß der Zahl von PPPs logischer Kanäle, entsprechend jeder Zieladresse der UE, die von der UE berichtet ist, umfasst.

5. Ressourcenzuweisungsverfahren, **dadurch gekennzeichnet, dass** es umfasst:
Empfangen (S1000), durch eine Anwenderausrüstung, UE, einer ersten Übereinstimmung zwischen Priorität-pro-Paket, PPPs, und Logikkanalgruppenkennungen, LCG IDs, jeder Zieladresse, von einer netzwerkseitigen Vorrichtung;
Bestimmen (S1001), durch die UE, einer dritten Übereinstimmung zwischen Logikkanälen und den LCG IDs jeder Zieladresse gemäß der ersten Übereinstimmung und einer zweiten Übereinstimmung zwischen den PPPs und den Logikkanälen jeder Zieladresse;
in Bezug auf jede Zieladresse, Konfigurieren (S1002), durch die UE, von Daten für Teile oder alle der Logikkanäle, entsprechend den LCG IDs in Pufferstatusinformationen, entsprechend den LCG IDs in einem Seitenlink-Pufferstatusbericht-, BSR, Medienzugriffsteuerungs-, MAC, Steuerungselement, CE, gemäß der dritten Übereinstimmung; und
Berichten (S1003), durch die UE, des Seitenlink-BSR MAC CE an die netzwerkseitige Vorrichtung, sodass die netzwerkseitige Vorrichtung die PPPs entsprechend den LCG IDs jeder Zieladresse in dem Seitenlink-BSR MAC CE gemäß der ersten Übereinstimmung bestimmt und eine Ressource für die UE gemäß der bestimmten PPPs zuweist.

6. Ressourcenzuweisungsverfahren nach Anspruch 5, wobei der Schritt des Empfangens, durch die UE, der ersten Übereinstimmung zwischen den PPPs und den LCG IDs jeder Zieladresse von der netzwerkseitigen Vorrichtung Empfangen, durch die UE, der ersten Übereinstimmung durch Rundfunk oder dedizierte Signalisierung umfasst.

7. Ressourcenzuweisungsverfahren nach Anspruch 5, wobei der Schritt des Konfigurierens, in Bezug auf jede Zieladresse, durch die UE, der Daten für Teile oder alle der Logikkanäle entsprechend den LCG IDs in den Pufferstatusinformationen entsprechend den LCG IDs in dem Seitenlink-BSR MAC CE gemäß der dritten Übereinstimmung umfasst:
Bestimmen, durch die UE, der dritten Übereinstimmung für jede Zieladresse;
in Bezug auf eine Zieladresse, Auswählen, durch die UE, einer LCG ID aus allen der LCG IDs der Zieladresse oder Auswählen, durch die UE, aller der LCG IDs der Zieladresse; und
Konfigurieren, durch die UE, von Daten für Teile oder alle der Logikkanäle entsprechend der ausgewählten einen oder mehr LCG IDs in den Pufferstatusinformationen, entsprechend der einen oder den mehr LCG IDs in dem Seitenlink-BSR MAC CE in Übereinstimmung mit der dritten Übereinstimmung.

8. Ressourcenzuweisungsverfahren nach Anspruch 7, wobei nach dem Schritt des Auswählens, in Bezug auf eine Zieladresse, durch die UE, einer LCG ID aus allen der LCG IDs der Zieladresse oder Auswählen, durch die UE, aller der LCG IDs der Zieladresse, und vor dem Schritt des Berichtens, durch die UE, des Seitenlink-BSR MAC CE an die netzwerkseitige Vorrichtung, das Ressourcenzuweisungsverfahren weiter Konfigurieren, durch die UE, erster Anzeigeinformationen in dem Seitenlink-BSR MAC CE umfasst, wobei die ersten Anzeigeinformationen verwendet werden, um der netzwerkseitigen Vorrichtung zu melden, ob die Pufferstatusinformationen entsprechend einer LCG ID der Zieladresse oder die Pufferstatusinformationen entsprechend allen der LCG IDs der Zieladresse in dem Seitenlink-BSR MAC CE konfiguriert sind.

9. Ressourcenzuweisungsverfahren nach Anspruch 5, wobei der Schritt des Konfigurierens, durch die UE, der Daten für Teile oder alle der Logikkanäle entsprechend der ausgewählten einen oder mehr LCG IDs in den Pufferstatusinformationen entsprechend der einen oder mehr LCG IDs in dem Seitenlink-BSR MAC CE gemäß der dritten Übereinstimmung umfasst:
Bestimmen, durch die UE, der dritten Übereinstimmung für jede Zieladresse;
in Bezug auf eine Zieladresse, Auswählen, durch die UE, der einen oder mehr LCG IDs, wo Daten von allen der LCG IDs der Zieladresse zu übertragen sind; und
Konfigurieren, durch die UE, der Daten für Teile oder alle der Logikkanäle entsprechend der ausgewählten einen oder mehr LCG IDs in den Pufferstatusinformationen entsprechend der ausgewählten einen oder mehr LCG IDs in dem Seitenlink-BSR MAC CE gemäß der dritten Übereinstimmung.

10. Ressourcenzuweisungsverfahren nach Anspruch 9, wobei nach dem Schritt des Auswählens, in Bezug auf eine Zieladresse, durch die UE, einer LCG ID aller der LCG IDs der Zieladresse oder Auswählens, durch die UE, aller der LCG IDs der Zieladresse, und vor dem Schritt des Berichtens, durch die UE, des Seitenlink-BSR MAC CE an die netzwerkseitige Vorrichtung, das Ressourcenzuweisungsverfahren weiter Konfigurieren, durch die UE, zweiter Anzeigeinformationen entsprechend jeder Zieladresse in dem Seitenlink-BSR MAC CE umfasst, wobei die zweiten Anzeigeinformationen verwendet werden, um der netzwerkseitigen Vorrichtung die Zahl von LCG IDs der Zieladresse in dem Seitenlink-BSR MAC CE zu melden.

11. Netzwerkseitige Vorrichtung zur Ressourcenzuweisung, **dadurch gekennzeichnet, dass** sie umfasst:
ein Meldungsmodul (500), das konfiguriert ist, eine erste Übereinstimmung zwischen PPPs und LCG IDs jeder Zieladresse an eine UE zu melden;
ein Bestimmungsmodul (501), das konfiguriert ist, bei dem Empfang eines Seitenlink-BSR MAC CE, das von der UE berichtet ist, die PPPs entsprechend den LCG IDs jeder Zieladresse in dem Seitenlink-BSR MAC CE gemäß der ersten Übereinstimmung zu bestimmen; und
ein Zuweisungsmodul (502), das konfiguriert ist, eine Ressource für jede Zieladresse der UE gemäß den bestimmten PPs und Pufferstatusinformationen entsprechend den LCG IDs jeder Zieladresse in dem Seitenlink-BSR MAC CE zuzuweisen.

12. Netzwerkseitige Vorrichtung nach Anspruch 11, wobei das Meldungsmodul weiter konfiguriert ist, die erste Übereinstimmung in einem neu hinzugefügten IE in einem SIB von 3GPP TS 36.331 oder in einem neu hinzugefügten SIB, der sich von dem SIB von 3GPP TS 36.331 unterscheidet, zu konfigurieren und die erste Übereinstimmung zwischen den PPPs und den LCG IDs jeder Zieladresse an die UE mittels Rundfunk zu melden, oder
wobei das Meldungsmodul weiter konfiguriert ist, die erste Übereinstimmung zwischen den PPPs und den LCG IDs jeder Zieladresse an die UE mittels dedizierter Signalisierung zu melden, wobei identische oder unterschiedliche Zieladressen unterschiedlicher UEs die ersten Übereinstimmungen zwischen den PPPs und den LCG IDs aufweisen, die identisch zueinander oder unterschiedlich voneinander sind, und unterschiedliche Zieladressen einer identischen UE die ersten Übereinstimmungen zwischen den PPPs und den LCG IDs aufweisen, die identisch zueinander oder unterschiedlich voneinander sind, oder
wobei das Meldungsmodul weiter konfiguriert ist, vor Melden der ersten Übereinstimmung zwischen den PPPs und den LCG IDs jeder Zieladresse an die UE, die erste Übereinstimmung zwischen den PPPs und den LCG IDs jeder Zieladresse an die UE gemäß der Zahl von PPPs logischer Kanäle entsprechend jeder Zieladresse der UE zu bestimmen, die von der UE berichtet ist.

13. UE zur Ressourcenzuweisung, die **dadurch gekennzeichnet ist, dass** sie umfasst:
ein Empfangsmodul (600), das konfiguriert ist, eine erste Übereinstimmung zwischen PPPs und LCG IDs jeder Zieladresse von einer netzwerkseitigen Vorrichtung zu empfangen;
ein Verarbeitungsmodul (601), das konfiguriert ist, eine dritte Übereinstimmung zwischen Logikkanälen und den LCG IDs jeder Zieladresse gemäß der ersten Übereinstimmung und einer zweiten Übereinstimmung zwischen den PPPs und den Logikkanälen jeder Zieladresse zu bestimmen;
ein Erzeugungsmodul (602), das konfiguriert ist, in Bezug auf jede Zieladresse, Daten für Teile oder alle der Logikkanäle entsprechend den LCG IDs in Pufferstatusinformationen entsprechend den LCG IDs in einem Seitenlink-BSR MAC CE gemäß der dritten Übereinstimmung zu konfigurieren; und
ein Berichtmodul (603), das konfiguriert ist, das Seitenlink-BSR MAC CE an die netzwerkseitige Vorrichtung zu berichten, sodass die netzwerkseitige Vorrichtung die PPPs entsprechend den LCG IDs jeder Zieladresse in dem Seitenlink-BSR MAC CE in Übereinstimmung mit der ersten Übereinstimmung bestimmt und eine Ressource für die UE gemäß den bestimmten PPPs zuweist.

14. UE nach Anspruch 13, wobei das Empfangsmodul weiter konfiguriert ist, die erste Übereinstimmung mittels Rundfunk oder dedizierter Signalisierung zu empfangen, und
wobei das Erzeugungsmodul weiter konfiguriert ist zum: Bestimmen der dritten Übereinstimmung für jede Zieladresse; in Bezug auf eine Zieladresse, Auswählen einer LCG ID aus allen der LCG IDs der Zieladresse oder Auswählen aller der LCG IDs der Zieladresse; und Konfigurieren von Daten für Teile oder alle der Logikkanäle entsprechend der ausgewählten einen oder mehr LCG IDs in den Pufferstatusinformationen, entsprechend der einen oder mehr LCG IDs in dem Seitenlink-BSR MAC CE in Übereinstimmung mit der dritten Übereinstimmung, und
wobei das Erzeugungsmodul weiter konfiguriert ist, erste Anzeigeinformationen in dem Seitenlink-BSR MAC CE zu konfigurieren, wobei die ersten Anzeigeinformationen verwendet werden, der netzwerkseitigen Vorrichtung zu melden, ob die Pufferstatusinformationen entsprechend einer LCG ID der Zieladresse oder die Pufferstatusinformationen entsprechend allen der LCG IDs der Zieladresse in dem Seitenlink-BSR MAC CE konfiguriert sind.

15. UE nach Anspruch 13, wobei das Erzeugungsmodul weiter konfiguriert ist zum: Bestimmen der dritten Übereinstimmung für jede Zieladresse; in Bezug auf eine Zieladresse, Auswählen der LCG IDs, wo Daten von allen der LCG IDs der Zieladresse zu übertragen sind; und Konfigurieren der Daten für Teile oder alle der Logikkanäle entsprechend der ausgewählten einen oder den mehr LCG IDs in den Pufferstatusinformationen, entsprechend der ausgewählten einen oder den mehr LCG IDs in dem Seitenlink-BSR MAC CE in Übereinstimmung mit der dritten Übereinstimmung, und
wobei das Erzeugungsmodul weiter konfiguriert ist, zweite Anzeigeinformationen entsprechend jeder Zieladresse in dem Seitenlink BSR MAC CE zu konfigurieren, wobei die zweiten Anzeigeinformationen verwendet werden, der netzwerkseitigen Vorrichtung die Zahl von LCG IDs der Zieladresse in dem Seitenlink-BSR MAC CE zu melden.

## Revendications

1. Procédé d'allocation de ressource, **caractérisé en ce qu'**il comprend :
la notification (S900), par un dispositif côté réseau, d'une première correspondance entre une priorité par paquet, PPP, et des identifiants de groupe de canaux logiques, LCG ID, de chaque adresse cible à un équipement utilisateur, UE ;
lors de la réception d'un élément de contrôle, CE, de contrôle d'accès au support, MAC, de rapport de statut de mémoire tampon, BSR, de liaison annexe, signalé par l'UE, la détermination (S901), par le dispositif côté réseau, des PPP correspondant aux LCG ID de chaque adresse cible dans le BSR MAC CE de liaison annexe conformément à la première correspondance ; et
l'allocation (S902), par le dispositif côté réseau, d'une ressource pour chaque adresse cible de l'UE conformément aux PPP déterminées et aux informations de statut de mémoire tampon correspondant aux LCG ID de chaque adresse cible dans le BSR MAC CE de liaison annexe.

2. Procédé d'allocation de ressource selon la revendication 1, dans lequel l'étape de notification, par le dispositif côté réseau, de la première correspondance entre les PPP et les LCG ID de chaque adresse cible à l'UE comprend la configuration, par le dispositif côté réseau, de la première correspondance dans un élément d'informations, IE, nouvellement ajouté, dans un bloc d'informations système, SIB, de spécification technique, TS, 3GPP 36.331 ou dans un SIB nouvellement ajouté différent du SIB de 3GPP TS 36.331, et la notification de la première correspondance entre les PPP et les LCG ID de chaque adresse cible à l'UE par radiodiffusion.

3. Procédé d'allocation de ressource selon la revendication 1, dans lequel l'étape de notification, par le dispositif côté réseau, de la première correspondance entre les PPP et les LCG ID de chaque adresse cible à l'UE comprend la notification, par le dispositif côté réseau, de la première correspondance entre les PPP et les LCG ID de chaque adresse cible à l'UE par signalisation dédiée, dans lequel des adresses cibles identiques ou différentes de différents UE ont les premières correspondances entre les PPP et les LCG ID identiques les unes aux autres ou différentes les unes des autres, et des adresses cibles différentes d'un UE identique ont les premières correspondances entre les PPP et les LCG ID identiques les unes aux autres ou différentes les unes des autres.

4. Procédé d'allocation de ressource selon la revendication 3, dans lequel avant l'étape de notification, par le dispositif côté réseau, de la première correspondance entre les PPP et les LCG ID de chaque adresse cible à l'UE, le procédé d'allocation de ressource comprend en outre la détermination, par le dispositif côté réseau, de la première correspondance entre les PPP et les LCG ID de chaque adresse cible à l'UE conformément au nombre de PPP de canaux logiques correspondant à chaque adresse cible de l'UE signalé par l'UE.

5. Procédé d'allocation de ressource, **caractérisé en ce qu'**il comprend :
la réception (S1000), par un équipement utilisateur, UE, d'une première correspondance entre une priorité par paquet, PPP, et des identifiants de groupe de canaux logiques, LCG ID, de chaque adresse cible en provenance d'un dispositif côté réseau ;
la détermination (S1001), par l'UE, d'une troisième correspondance entre des canaux logiques et les LCG ID de chaque adresse cible conformément à la première correspondance et une deuxième correspondance entre les PPP et les canaux logiques de chaque adresse cible ;
par rapport à chaque adresse cible, la configuration (S1002), par l'UE, de données pour des parties ou la totalité des canaux logiques correspondant aux LCG ID dans des informations de statut de mémoire tampon correspondant aux LCG ID dans un élément de contrôle, CE, de contrôle d'accès au support, MAC, de rapport de statut de mémoire tampon, BSR, de liaison annexe, conformément à la troisième correspondance ; et
le signalement (S1003), par l'UE, du BSR MAC CE de liaison annexe au dispositif côté réseau, de sorte que le dispositif côté réseau détermine les PPP correspondant aux LCG ID de chaque adresse cible dans le BSR MAC CE de liaison annexe conformément à la première correspondance, et alloue une ressource pour l'UE conformément aux PPP déterminées.

6. Procédé d'allocation de ressource selon la revendication 5, dans lequel l'étape de réception, par l'UE, de la première correspondance entre les PPP et les LCG ID de chaque adresse cible en provenance du dispositif côté réseau comprend la réception, par l'UE, de la première correspondance par radiodiffusion ou signalisation dédiée.

7. Procédé d'allocation de ressource selon la revendication 5, dans lequel l'étape, par rapport à chaque adresse cible, de configuration, par l'UE, des données pour des parties ou la totalité des canaux logiques correspondant aux LCG ID dans les informations de statut de mémoire tampon correspondant aux LCG ID dans le BSR MAC CE de liaison annexe conformément à la troisième correspondance comprend :
la détermination, par l'UE, de la troisième correspondance pour chaque adresse cible ;
par rapport à une adresse cible, la sélection, par l'UE, d'un LCG ID parmi la totalité des LCG ID de l'adresse cible ou la sélection, par l'UE, de la totalité des LCG ID de l'adresse cible ; et
la configuration, par l'UE, de données pour des parties ou la totalité des canaux logiques correspondant aux un ou plusieurs LCG ID sélectionnés dans les informations de statut de mémoire tampon correspondant aux un ou plusieurs LCG ID dans le BSR MAC CE de liaison annexe conformément à la troisième correspondance.

8. Procédé d'allocation de ressource selon la revendication 7, dans lequel ultérieurement à l'étape, par rapport à une adresse cible, de sélection, par l'UE, d'un LCG ID parmi la totalité des LCG ID de l'adresse cible ou de sélection, par l'UE, de la totalité des LCG ID de l'adresse cible, et avant l'étape de signalement, par l'UE, du BSR MAC CE de liaison annexe au dispositif côté réseau, le procédé d'allocation de ressource comprend en outre la configuration, par l'UE, de premières informations d'indication dans le BSR MAC CE de liaison annexe, dans lequel les premières informations d'indication sont utilisées pour notifier au dispositif côté réseau si les informations de statut de mémoire tampon correspondant à un LCG ID de l'adresse cible ou les informations de statut de mémoire tampon correspondant à la totalité des LCG ID de l'adresse cible sont configurées dans le BSR MAC CE de liaison annexe.

9. Procédé d'allocation de ressource selon la revendication 5, dans lequel l'étape de configuration, par l'UE, des données pour des parties ou la totalité des canaux logiques correspondant aux un ou plusieurs LCG ID sélectionnés dans les informations de statut de mémoire tampon correspondant aux un ou plusieurs LCG ID dans le BSR MAC CE de liaison annexe conformément à la troisième correspondance comprend :
la détermination, par l'UE, de la troisième correspondance pour chaque adresse cible ;
par rapport à une adresse cible, la sélection, par l'UE, des un ou plusieurs LCG ID où des données doivent être transmises depuis la totalité des LCG ID de l'adresse cible ; et
la configuration, par l'UE, des données pour des parties ou la totalité des canaux logiques correspondant aux un ou plusieurs LCG ID sélectionnés dans les informations de statut de mémoire tampon correspondant aux un ou plusieurs LCG ID sélectionnés dans le BSR MAC CE de liaison annexe conformément à la troisième correspondance.

10. Procédé d'allocation de ressource selon la revendication 9, dans lequel ultérieurement à l'étape, par rapport à une adresse cible, de sélection, par l'UE, d'un LCG ID parmi la totalité des LCG ID de l'adresse cible ou de sélection, par l'UE, de la totalité des LCG ID de l'adresse cible, et avant l'étape de signalement, par l'UE, du BSR MAC CE de liaison annexe au dispositif côté réseau, le procédé d'allocation de ressource comprend en outre la configuration, par l'UE, de secondes informations d'indication correspondant à chaque adresse cible dans le BSR MAC CE de liaison annexe, dans lequel les secondes informations d'indication sont utilisées pour notifier au dispositif côté réseau le nombre de LCG ID de l'adresse cible dans le BSR MAC CE de liaison annexe.

11. Dispositif côté réseau pour une allocation de ressource, **caractérisé en ce qu'**il comprend :
un module de notification (500) configuré pour notifier une première correspondance entre des PPP et des LCG ID de chaque adresse cible à un UE ;
un module de détermination (501) configuré pour, lors de la réception d'un BSR MAC CE de liaison annexe signalé par l'UE, déterminer les PPP correspondant aux LCG ID de chaque adresse cible dans le BSR MAC CE de liaison annexe conformément à la première correspondance ; et
un module d'allocation (502) configuré pour allouer une ressource pour chaque adresse cible de l'UE conformément aux PPP déterminées et à des informations de statut de mémoire tampon correspondant aux LCG ID de chaque adresse cible dans le BSR MAC CE de liaison annexe.

12. Dispositif côté réseau selon la revendication 11, dans lequel le module de notification est en outre configuré pour configurer la première correspondance dans un IE nouvellement ajouté dans un SIB de 3GPP TS 36.331 ou dans un SIB nouvellement ajouté différent du SIB de 3GPP TS 36.331, et notifier la première correspondance entre les PPP et les LCG ID de chaque adresse cible à l'UE par radiodiffusion, ou
dans lequel le module de notification est en outre configuré pour notifier la première correspondance entre les PPP et les LCG ID de chaque adresse cible à l'UE par signalisation dédiée, dans lequel des adresses cibles identiques ou différentes de différents UE ont les premières correspondances entre les PPP et les LCG ID identiques les unes aux autres ou différentes les unes des autres, et des adresses cibles différentes d'un UE identique ont les premières correspondances entre les PPP et les LCG ID identiques les unes aux autres ou différentes les unes des autres, ou
dans lequel le module de notification est en outre configuré pour, avant notification de la première correspondance entre les PPP et les LCG ID de chaque adresse cible à l'UE, déterminer la première correspondance entre les PPP et les LCG ID de chaque adresse cible à l'UE conformément au nombre de PPP de canaux logiques correspondant à chaque adresse cible de l'UE signalé par l'UE.

13. UE pour une allocation de ressource, **caractérisé en ce qu'**il comprend :
un module de réception (600) configuré pour recevoir une première correspondance entre des PPP et des LCG ID de chaque adresse cible en provenance d'un dispositif côté réseau ;
un module de traitement (601) configuré pour déterminer une troisième correspondance entre des canaux logiques et les LCG ID de chaque adresse cible conformément à la première correspondance et une deuxième correspondance entre les PPP et les canaux logiques de chaque adresse cible ;
un module de génération (602) configuré pour, par rapport à chaque adresse cible, configurer des données pour des parties ou la totalité des canaux logiques correspondant aux LCG ID dans des informations de statut de mémoire tampon correspondant aux LCG ID dans un BSR MAC CE de liaison annexe conformément à la troisième correspondance ; et
un module de signalement (603) configuré pour signaler le BSR MAC CE de liaison annexe au dispositif côté réseau, de sorte que le dispositif côté réseau détermine les PPP correspondant aux LCG ID de chaque adresse cible dans le BSR MAC CE de liaison annexe conformément à la première correspondance, et alloue une ressource pour l'UE conformément aux PPP déterminées.

14. UE selon la revendication 13, dans lequel le module de réception est en outre configuré pour recevoir la première correspondance par radiodiffusion ou signalisation dédiée, et
dans lequel le module de génération est en outre configuré pour : déterminer la troisième correspondance pour chaque adresse cible ; par rapport à une adresse cible, sélectionner un LCG ID parmi la totalité des LCG ID de l'adresse cible ou sélectionner la totalité des LCG ID de l'adresse cible ; et configurer des données pour des parties ou la totalité des canaux logiques correspondant aux un ou plusieurs LCG ID sélectionnés dans les informations de statut de mémoire tampon correspondant aux un ou plusieurs LCG ID dans le BSR MAC CE de liaison annexe conformément à la troisième correspondance, et
dans lequel le module de génération est en outre configuré pour configurer des premières informations d'indication dans le BSR MAC CE de liaison annexe, dans lequel les premières informations d'indication sont utilisées pour notifier au dispositif côté réseau si les informations de statut de mémoire tampon correspondant à un LCG ID de l'adresse cible ou les informations de statut de mémoire tampon correspondant à la totalité des LCG ID de l'adresse cible sont configurées dans le BSR MAC CE de liaison annexe.

15. UE selon la revendication 13, dans lequel le module de génération est en outre configuré pour : déterminer la troisième correspondance pour chaque adresse cible ; par rapport à une adresse cible, sélectionner les LCG ID où des données doivent être transmises depuis la totalité des LCG ID de l'adresse cible ; et configurer les données pour des parties ou la totalité des canaux logiques correspondant aux un ou plusieurs LCG ID sélectionnés dans les informations de statut de mémoire tampon correspondant aux un ou plusieurs LCG ID sélectionnés dans le BSR MAC CE de liaison annexe conformément à la troisième correspondance, et
dans lequel le module de génération est en outre configuré pour configurer des secondes informations d'indication correspondant à chaque adresse cible dans le BSR MAC CE de liaison annexe, dans lequel les secondes informations d'indication sont utilisées pour notifier au dispositif côté réseau le nombre de LCG ID de l'adresse cible dans le BSR MAC CE de liaison annexe.
